# EUROPEAN PATENT APPLICATION

(11) **EP 2 408 078 A2**
(43) Date of publication of application: **18.01.2012**
(21) Application number: 11173243.4
(22) Date of filing: 08.07.2011
(51) Int. Cl.: H02H 1/04, H02H 9/00

(54) **Centrally controlled protection system having reduced energy let-through mode**

(30) Priority: 15.07.2010 US 836998
(71) Applicant: General Electric Company, Schenectady, NY 12345 (US)
(72) Inventor: Narel, Radoslaw, Plainville, CT Connecticut 06062 (US); Papallo, Jr., Thomas Frederick, Plainville, CT Connecticut 06062 (US); Rao, Joseph, Plainville, CT Connecticut 06062 (US)
(74) Representative: Illingworth-Law, William Illingworth

(57) **Abstract**

A method and system for a power distribution system, the method including defining with the central controller at least one alternate mode configuration setting for the at least one of the plurality of circuit breakers of the power distribution system, wherein the at least one alternate mode configuration setting includes a reduced energy let-thru (RELT) mode setting. The method further includes determining with the central controller if the at least one of the plurality of circuit breakers is in a pick-up mode and operating the at least one of the plurality of circuit breakers using one of the at least one normal mode configuration setting and the at least one alternate mode configuration setting, wherein the operating the at least one of the plurality of circuit breakers using the at least one alternate mode configuration setting is delayed for a predetermined period if the at least one of the plurality of circuit breakers is in a pick-up mode.

## Description

### BACKGROUND OF THE INVENTION

### Field of the Invention

The field of the invention relates generally to methods and systems for controlling power distribution systems, and more particularly to such methods and systems for controlling circuit breakers within the power distribution systems.

Power distribution systems typically include access points, for example, switchgear units having a plurality of circuit breakers for controlling the flow of power through the system and protecting the system, such as, by providing fault protection. Service personnel may need to access these different points to perform maintenance, service, diagnosis, etc. For example, service personnel or operators may need to replace, service and/or perform maintenance on components of the switchgear, and more particularly, circuit breakers of the switchgear. Occasionally, this work is performed on energized equipment due to necessity. The potential energy of typical switchgear is such that in the event of an fault an arch flash will occur resulting in damage to equipment and/or serious harm or death to service personnel can occur.

Additionally, circuit breakers are often used to protect against overcurrent faults by measuring a current in a protected circuit or branch, and tripping to cut off the current when the measured current exceeds a predetermined fault level. Conventional circuit breakers often employ microprocessor-based digital solid-state trip units to generate an inverse time long delay and/or short delay trip such as by digital simulation of the heating and cooling of a bimetallic strip. Such conventional circuit breaker trip units store in a memory a digital value which simulates the temperature of the bimetallic strip. The memory may be a Random Access Memory (RAM) such as an accumulator-type memory. When the measured current exceeds a predetermined pick-up level, the circuit breaker trip unit is considered to be in "pick-up" mode, and a stored value, or accumulator, is incremented by a predetermined amount, such as for example, by a factor of the square of the current. Conversely, if the measured current is lower than the predetermined pick-up level, the stored value or accumulator is decremented by a predetermined amount. In the event that the stored or accumulator value exceeds a predetermined maximum value, the circuit breaker trip unit will determine a fault exists and issue a trip signal to clear the fault.

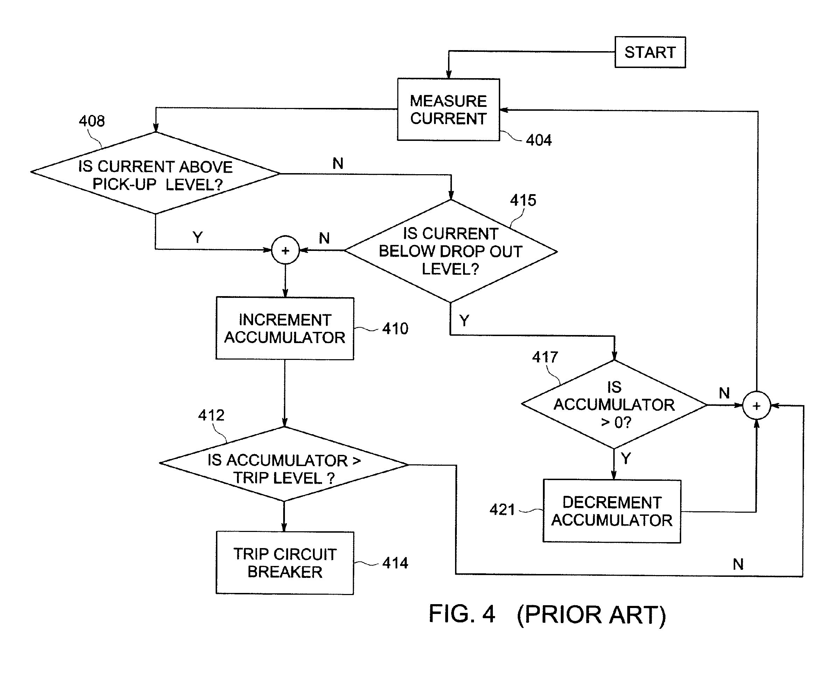

For example, as illustrated at step 404 of Fig. 4, a conventional circuit breaker trip unit, measures or receives an indication of a current flowing in a protected circuit. At step 408, the circuit breaker trip unit determines if the current is above a predetermined pick-up level. If so, then at step 410 the circuit breaker enters pick-up mode, and a stored value in the processor or accumulator-type memory is incremented by a predetermined amount. If the stored value is then determined at step 412 to have exceeded a predetermined level, the trip unit issues a signal to trip the circuit breaker at step 414. If the stored value was determined at step 412 not to have exceeded the predetermined level, then the trip unit continues to measure the current flowing in the protected circuit. If, at step 408, the measured current was determined to be below the predetermined pick-up level, it is then determined at step 415 if the measured current is below a predetermined drop-out level, and if not, the stored value in the processor or accumulator-type memory, if any, is incremented by a predetermined amount. If, at step 415 it is determined that the measured current is below a predetermined drop-out level, then, at step 417 stored value of the accumulator is checked to determine if it is greater than zero. If so, then at step 421, the stored value of the accumulator is decremented by a predetermined amount. If, at step 417, it is determined that the stored value of the accumulator is not greater than zero, then the trip unit continues to measure the current flowing in the protected circuit.

In order to ensure that power is provided continuously, except to faulted branch(s), circuit breaker delays are added throughout the system. These delays in the circuit protection typically must meet minimum standards for safety. However, the more sensitive a circuit breaker, the easier the circuit breaker will be activated (e.g., tripped by a voltage spike), which could result, for example, in the shut down of a facility or manufacturing plant. Thus, there is a tradeoff between selectivity and safety.

In order to increase safety to personnel working on (and around) these systems, while also maintaining power through the system, it is known to provide localized safety measures. For example, it is known to increase fault sensitivity in a breaker near a service personnel or operator such as through an alternate trip setting for a reduced energy let-thru (RELT) mode or maintenance mode. For example, a button on a breaker or a switchgear box may be activated to increase fault sensitivity to one or more circuit breakers in the switchgear. Sensors, such as on the door of the switchgear box, also may be provided and cause a portion of the switchgear to have reduced power when the door is opened. In general, an individual controller is provided with each circuit breaker that allows local control of the circuit breaker. However, the increased fault sensitivity operation may affect other parts of the power system. Essentially, these safety measures are used to protect individuals working on or around the power system and temporarily increase the susceptibility of the system to nuisance and trip certain branch circuits in order to minimize the impact to equipment and personnel in the event of a fault event.

However, in some cases, the fault sensitivity of a circuit breaker may be increased, such as through an alternate trip setting for a reduced energy let-thru (RELT) mode, and the predetermined maximum accumulator value for issuance of a trip signal consequently decreased, while the circuit breaker trip unit is in a "pick up" mode. For example, the fault sensitivity of a circuit breaker may be increased after the measured current has briefly exceeded a predetermined pick-up level, and the stored value, or accumulator, has been incremented but remains below the predetermined value for a trip signal. In such cases, although a current fault condition is not present, the stored accumulator value may exceed the predetermined value for issuance of a trip signal at the new, increased sensitivity level. As a result, an undesired tripping of the circuit breaker may occur which could result, for example, in the shut down of a facility or manufacturing plant.

Thus, known methods and systems do not adequately address the instance of circuit breakers in pick-up mode at the time an alternate trip setting for a reduced energy let-thru (RELT) mode is activated. Accordingly, undesired disruption to the system may result.

### BRIEF SUMMARY OF THE INVENTION

One or more specific embodiments shown and/or described herein address at least the above-mentioned need.

Apparatus, systems and methods of varying scope are shown and described herein. In addition to the advantages described above, further advantages and/or adaptations or variations will become apparent by reference to the drawings and by reading the remaining portions of the specification.

In an embodiment, a method for controlling a power distribution system is disclosed, the said method comprising defining with a central controller at least one normal mode configuration setting for at least one of a plurality of circuit breakers of the power distribution system, defining with the central controller at least one alternate mode configuration setting for the at least one of the plurality of circuit breakers of the power distribution system, wherein the at least one alternate mode configuration setting includes a reduced energy let-thru (RELT) mode setting, determining with the central controller if the at least one of the plurality of circuit breakers is in a pick-up mode, operating the at least one of the plurality of circuit breakers using one of the at least one normal mode configuration setting and the at least one alternate mode configuration setting, wherein the operating the at least one of the plurality of circuit breakers using the at least one alternate mode configuration setting is delayed for a predetermined period if the at least one of the plurality of circuit breakers is in a pick-up mode.

In another embodiment, a controller for a power distribution system, is disclosed, the controller comprising a communication unit configured to communicate with a plurality of circuit breakers of the power distribution system, and a processor configured to define at least one normal mode configuration setting and at least one alternate mode configuration setting for at least one of the plurality of circuit breakers; determine if the at least one of the plurality of circuit breakers is in a pick-up mode; operate the at least one of the plurality of circuit breakers using one of the at least one normal mode configuration setting and at least one alternate mode configuration setting; and delay the operation of the at least one of the plurality of circuit breakers using the at least one alternate mode configuration setting for a predetermined period, if the at least one of the plurality of circuit breakers is in a pick-up mode.

### BRIEF DESCRIPTION OF THE DRAWINGS

Reference is now made briefly to the accompanying drawings, in which:

Figure 1 is a block diagram of a switchgear unit operated in accordance with an embodiment of the invention.

Figure 2 is a block diagram of a power distribution system having a central controller operated in accordance with an embodiment of the invention.

Figure 3 is a block diagram of a power control and protection system constructed in accordance with an embodiment of the invention.

Figure 4 is a flow diagram illustrating a circuit breaker trip unit operation known in the art.

Figure 5 is a flow diagram illustrating an embodiment for selectively switching between a RELT operating mode and a normal operating mode.

Figure 6 is a flow diagram illustrating an embodiment for reducing nuisance tripping of a circuit breaker.

Like reference characters designate identical or corresponding components and units throughout the several views, which are not to scale unless otherwise indicated.

### DETAILED DESCRIPTION OF THE INVENTION

The following description makes reference to the accompanying drawings that form a part hereof, and in which is shown by way of illustration specific embodiments that may be practiced. It is understood that other embodiments may be utilized and that various changes can be made to the embodiments shown and described herein without departing from the patentable scope of the claims appended hereto. The following description

As used herein, an element or function recited in the singular and proceeded with the word "a" or "an" should be understood as not excluding plural said elements or functions, unless such exclusion is explicitly recited. Furthermore, references to "one embodiment" of the claimed invention should not be interpreted as excluding the existence of additional embodiments that also incorporate the recited features, is, therefore, not to be taken in a limiting sense.

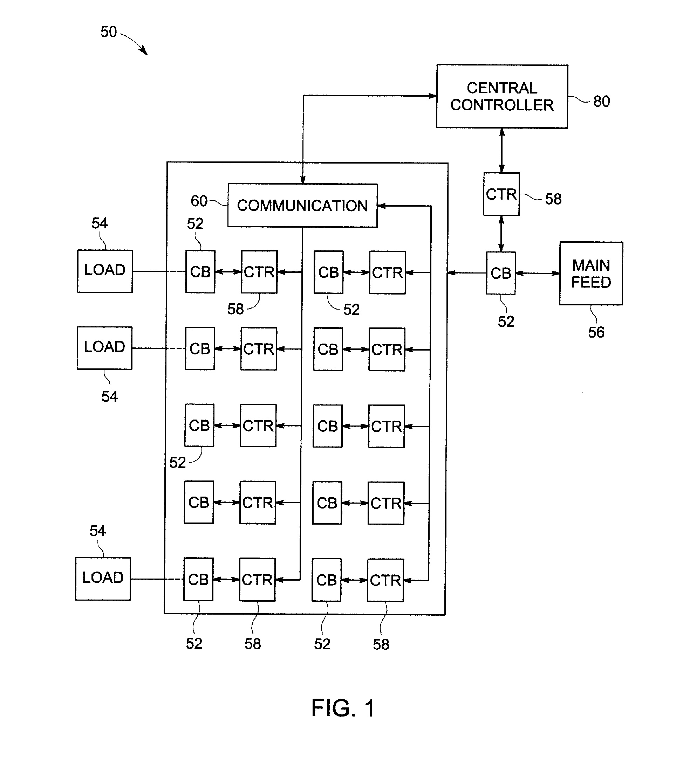

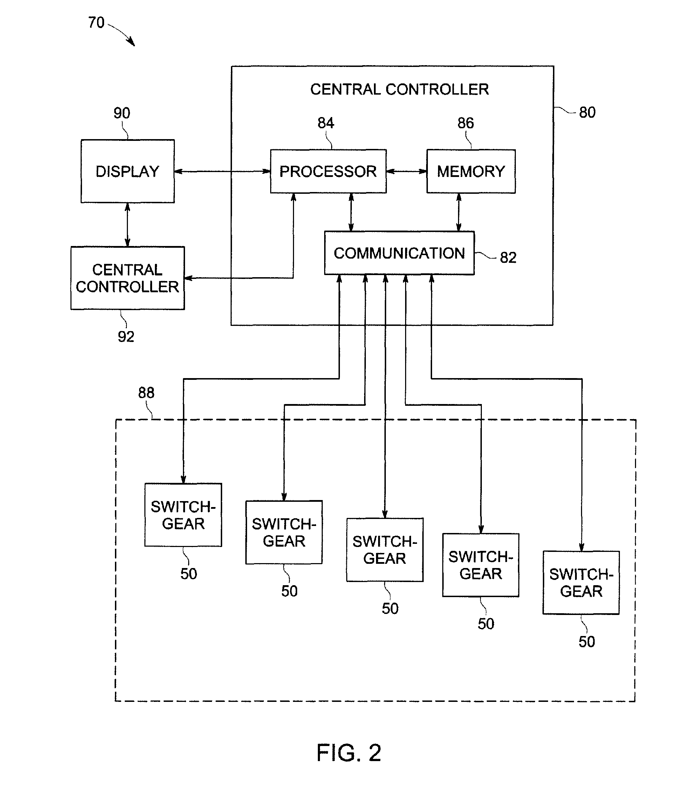

Various embodiments of the invention provide system for controlling power in power distribution systems. For example, as shown in Figure 1, power may be provided to components within a switchgear unit 50, which may be configured as a fixed portion of a power control and protection system 70 (shown in Figure 2). The switchgear unit 50 may be configured as a circuit breaker cabinet or box (not shown) having a plurality of circuit breakers 52 or other power circuit switches or interrupters therein. Each of the circuit breakers 52 is removably connectable to the switchgear unit 50 and is configured to control power to one or more loads 54, such as, but not limited to machinery, motors, lighting, and/or other electrical and electro-mechanical equipment that may be located within, for example, a manufacturing facility. Power to the switchgear unit 50 is provided from a main power feed 56, which also includes a circuit breaker 52 therebetween. The power is then divided into a plurality of branch circuits using the circuit breakers 52, which supply power to the various loads 54.

Each of the circuit breakers 52 is connected to a local controller 58. The local controllers 58 may be permanently or removably connected to the circuit breakers 52, for example, within the switchgear unit 50. The local controllers 58 provide communication to a central controller 80 and also may be connected to other sensors (not shown) that may sense, for example, motion, door contact closure, etc. This communication between the local controllers 58 and the central controller 80 may be provided directly or through a local communication unit 60. The communication between the local controllers 58 and the central controller 80 may be provided via a hardwired or wireless communication link.

The central controller 80, as shown more particularly in Figure 2, controls operation of a plurality of switchgear units 50, each of which are communicatively coupled to a central communication unit 82 of the central controller 80. The central controller 80 also includes a processor 84 and a memory 86. The processor 84 is configured to control operation of the various switchgear units 50, and more particularly, control the operation of the circuit breakers 52 (shown in Figure 1) as described in more detail below. The plurality of switchgear units 50 generally defines a power distribution system 88. A system for providing communication between the central controller 80 and the various components in a power distribution system 88 is described in more detail in U.S. Patent 6,892,115 titled "Method and Apparatus for Optimized Centralized Critical Control Architecture for Switchgear and Power Equipment" assigned to the assignee of the present invention and incorporated by reference herein in its entirety. However, it should be appreciated that the various embodiments may be implemented in connection with other control or communication systems in connection with a power distribution system.

A display 90 and a user input 92 also may be provided in connection with the central controller 80. The display 90 and user input 92 are configured to provide a user interface to monitor and control the power distribution system 88 with the power control and protection system 70.

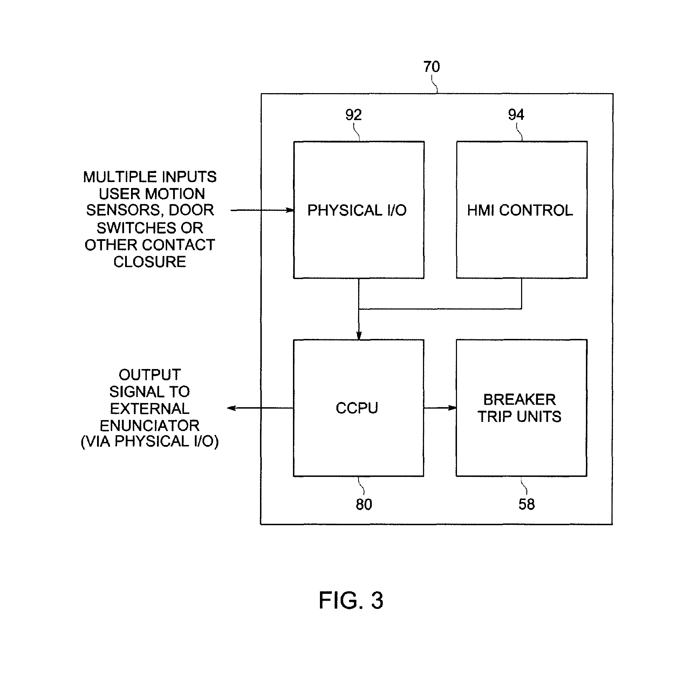

In one exemplary embodiment, as shown in Figure 3, the power control and protection system 70 includes a physical input/output (I/O) component 92 that is configured to receive one or more inputs from the switchgear unit 50 or sensors associated therewith. More particularly, sensors in connection with or in proximity to the switchgear unit 50 may sense different conditions or events to provide sensed information to the physical I/O component 92. For example, the sensed information may include information from (i) user motion sensors indicating that an individual is in proximity to a switchgear unit 50, (ii) door switches indicating that a door to a room wherein a switchgear unit 50 is located or a door to the switchgear unit 50 has been opened, (iii) other contact closure or proximity sensors as are known, (iv) an input from a programmable logic controller (PLC), (v) an auxiliary contact on a motor starter, among others. The I/O component 92 is connected to the central processor 80, which is configured to allow a user to create, for example, custom logic that will command one or more circuit breakers 52 (shown in Figure 1) to different or alternate settings. A user can control these settings through a human machine interface (HMI) control component 94, which may be provided on the display 90 (shown in Figure 2). The central processor 80 then controls the circuit breakers 52 via the controllers 58 (shown in Figure 1). For example, the central processor 80 issues a trip signal to trip a circuit breaker 52 based on normal trip settings and/or alternate settings or settings different from the normal trip settings. For example, a user customizable alternate setting for a reduced energy let-thru (RELT) mode or maintenance mode may be defined by a user and issued as a control signal upon the determination of certain conditions or events, such as, sensing with a sensor that an individual is servicing a circuit breaker 52 or by an individual pressing a service button on the switchgear unit 50. The central processor 80 also may provide the alternate circuit breaker setting to an external enunciator (now shown) via a physical I/O, such as the physical I/O 92. The external enunciator may be, for example, a horn or light tower, strobe light or other industrial type signaler. The central processor stores information relating to different settings and configurations in the memory 86 (shown in Figure 2).

It should be noted that the architecture of the power control and protection system 70 and power distribution system 88 as well as the various components is only exemplary. Other architectures are possible and may be utilized in connection with practicing the processes and interfacing with users as described herein. Also, different alternate modes are contemplated, for example, a seasonal mode, time of day mode and level of load or altered power mode.

In operation, in one exemplary embodiment, each circuit breaker 52 (shown in Figure 1) has a corresponding breaker configuration screen (not shown) and a RELT breaker configuration screen (not shown). Essentially, the RELT breaker configuration screen (not shown) includes alternate settings, such as for the instantaneous switchable, short term switchable, and ground fault settings than for the normal operating mode. For example, the following rules are implemented in one exemplary embodiment.

1. Switch a main circuit breaker into RELT mode and the associated tie(s) switch into RELT mode (minimizing all settings), and Short Time settings (only) will be minimized for all other mains and ties.

2. Switch a tie main circuit breaker into RELT mode and both associated mains switch into RELT mode (minimizing all settings) and Short Time settings (only) will be minimized for all other mains and ties.

3. Switch a main feeder circuit breaker into RELT mode and, system switches into RELT mode (minimizing all settings).

It should be noted that minimizing settings means that the time band is changed to a minimum selectable setting for the circuit breaker. To ensure that service personnel have changed all circuit breakers that have the potential to introduce current to a fault, the rules above may be enforced. For example, a parallel system (which has both the mains and associated tie closed) will potentially need both mains and tie in RELT mode in order to ensure safety.

Also, flex logic may be provided wherein VOs (virtual) type points allow a flex logic to turn on or off the RELT mode on each of a plurality of breakers independently. A feedback point is provided for each breaker and the flex logic input for a main or tie, and in one exemplary embodiment follows the same rules as above. In one exemplary embodiment, flex logic is a simple embedded programming language, similar to ladder logic. This logic describes the objects that will be available to flex logic and that will allow physical inputs to activate any one of the breakers into RELT mode. It should be noted that one physical input can turn on one or more circuit breakers.

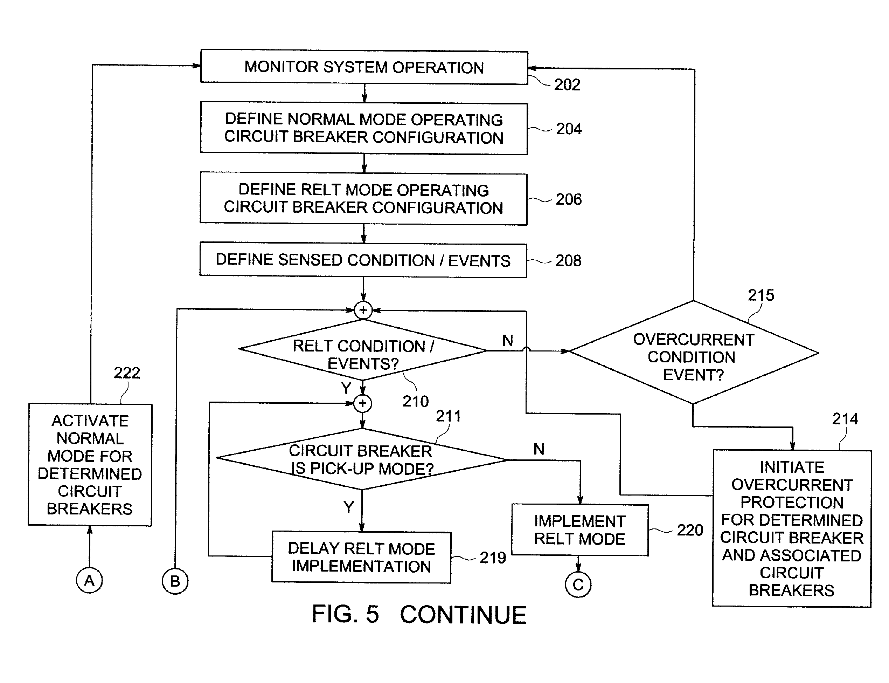

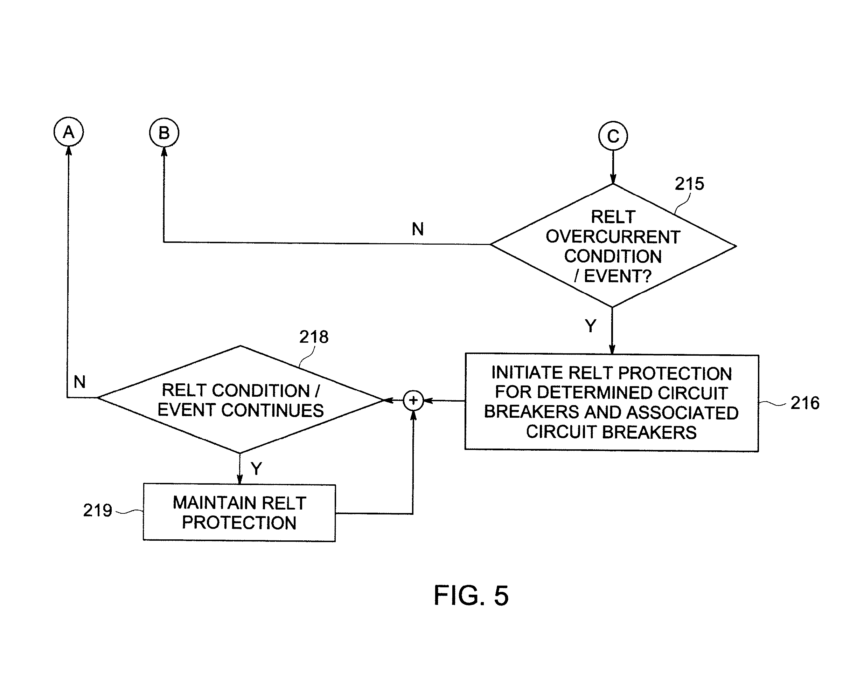

In operation, various embodiments of the invention include a method 200 as shown in Figure 5 providing a RELT mode of operation for one or more circuit breakers in a power distribution system. The method provides for selectively switching into the RELT mode each of the plurality of circuit breakers independently or based on the switching of other circuit breakers. The RELT mode of operation generally defines protection or maintenance settings for circuit breakers in a power distribution system. A technical effect of the various embodiments is to provide over current protection and multi-point protection in a power distribution system having a centralized control system and using a RELT mode of operation.

Specifically, at 202 the power distribution system is monitored by a controller to determine, for example, the current, voltage, frequency, etc., flowing through the system, and more particularly, through each branch of the system including each of the circuit breakers. Thereafter, at 204 a determination is made as to the normal mode breaker configuration, which is used to control the system during a normal mode of operation. For the normal mode breaker configuration, each circuit breaker in the power distribution system has a breaker configuration as determined and set by, for example, a breaker configuration in an overcurrent protection user interface. The breaker configuration can include settings that define instantaneous protection, short time protection, long time protection and ground fault protection. Each of these protection settings define a condition, and more particularly, a level above the rated current for the circuit breaker, at which a tripping operation is initiated, which may include a delay until the circuit breaker in tripped, except in the instantaneous condition.

Thereafter, at 206 a determination is made as to the RELT mode circuit breaker configuration, which is used to control the system during a RELT mode of operation. For the RELT mode circuit breaker configuration, each circuit breaker in the power distribution system has a circuit breaker configuration as determined and set by, for example, a circuit breaker configuration in a RELT protection user interface. The circuit breaker configuration can include settings that define various protection settings, such as instantaneous protection, short time protection, and ground fault protection. Each of these protection settings define a condition, and more particularly, a level above the rated current for the circuit breaker, at which a tripping operation is initiated, which may include a delay, such as a pick-up mode delay, until the circuit breaker is tripped, except in the instantaneous condition. In the various embodiments, these RELT settings are typically configured to provide faster tripping of the circuit breakers or tripping at lower current levels or both.

At 208 a determination is made as to whether there are any sensed conditions or events to trigger implementation of a RELT mode. This may include automatic sensed events or conditions resulting from manual activation. For example, and as described in more detail herein, a determination may be made as to whether a motion sensor in proximity to a switchgear unit has sensed motion or a door switch on a switchgear unit has been activated by the opening or closing of a door, indicating a RELT condition/event. Additionally, a determination may be made as to whether a manual activation has occurred, for example if an individual has activated a maintenance switch or button in connection with a switchgear unit, indicating a RELT condition/event.

Thereafter, at 210, a determination is made as to whether a RELT condition or event has occurred based on the sensed conditions/events determined at 208. If at 210 no RELT event/condition is determined to have occurred, then the system remains in the normal mode of operation and at 212 a determination is made as to whether an overcurrent condition/event has occurred. If no overcurrent condition/event has occurred at 212, then the process again returns to monitoring system operation at 202, which may also include determining whether any normal mode or RELT mode configuration settings have been modified. It should be noted that the configuration settings and other associated information may be stored in a memory of a central controller.

If it is determined, at 212, that an overcurrent condition/event has occurred, then at 214 an overcurrent protection procedure is initiated for any circuit breakers and associated circuit breakers wherein such a condition/event occurred. The overcurrent protection procedure includes tripping the circuit breaker as defined in the configuration settings, for example, after a predetermined delay if the overcurrent condition/event continues. The overcurrent protection procedure may include initiating a fault condition pick-up mode for the circuit breakers and associated circuit breakers. The overcurrent protection procedure continues until the condition/event no longer exists, such as, for example due to a tripping of the circuit breaker. If the condition/event remains, then a determination is again made at 210 whether a RELT condition/event has occurred, which may be after a predetermined time period, at predetermined intervals or continuously.

If, at 210, a determination is made that a RELT condition/event has occurred as determined by the sensed conditions/events at 208, then at 211, a determination is made as to whether any of the circuit breakers or associated circuit breakers wherein the RELT condition or event was determined to have occurred are in a fault condition pick-up mode. If, at 211 any of the circuit breakers or associated circuit breakers are determined to be in a pick-up mode, then, at 219, the alternate protection increased sensitivity setting or RELT mode of operation is not implemented in those circuit breakers determined to be in a pick-up mode for at least a predetermined delay.

If, at decision 211, it is determined that the circuit breakers or associated circuit breakers are not in a fault condition pick-up mode, for example because there is no, or a zero value stored value saved to the at least one circuit breaker trip unit memory or accumulator, then at 220, the alternate protection increased sensitivity setting or RELT mode of operation is implemented.

Thereafter, at 215, a determination is made as to whether a RELT overcurrent condition/event has occurred. If a RELT overcurrent condition/event has not occurred, then a determination is again made at 210 whether a RELT condition/event has occurred, which may be after a predetermined time period, at predetermined intervals or continuously. If at 215, it is determined that a RELT overcurrent condition/event has occurred, then at 216 a RELT protection procedure is initiated for any circuit breakers and associated circuit breakers wherein such a condition/event occurred. In an embodiment, the RELT protection procedure includes tripping the circuit breaker as defined in the RELT mode configuration settings. In an exemplary embodiment, this includes tripping the circuit breaker after a predetermined delay if the RELT overcurrent condition/event occurs. In one exemplary embodiment, the RELT mode predetermined delay is less than the delay during the normal mode of operation. In one embodiment, the RELT overcurrent protection procedure may include initiating a fault condition pick-up mode for the circuit breakers and associated circuit breakers.

Thereafter, at 218 a determination is made as to whether the RELT condition/event continues. If the RELT condition/event continues, then at 220 the RELT protection procedure is maintained. If at 218 a determination is made that the RELT condition/event does not continue, then at 222 the normal mode of operation is again initiated, which may include restoring the tripped circuit breaker(s).

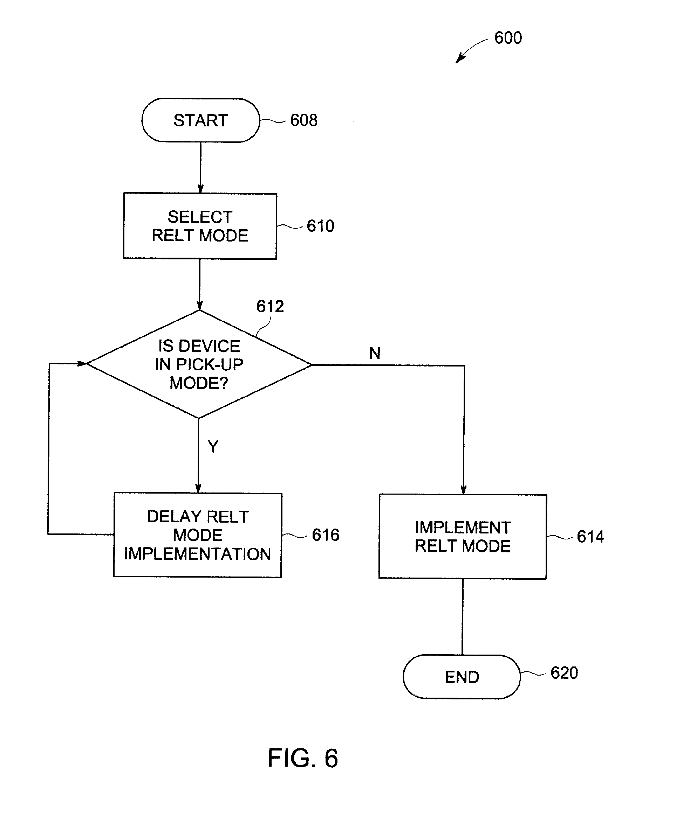

In operation, various embodiments of the invention include a method 600 as shown in Figure 6 providing an improved RELT mode of operation for one or more circuit breakers in a power distribution system. The method 600 may be executed at a centralized controller of an electrical distribution system

At 608 an alternate protection increased sensitivity setting, such as a RELT mode is determined for at least one circuit breaker.

Thereafter, at 610, the alternate protection setting for the at least one circuit breaker is selected.

Prior to the alternate protection settings of the RELT mode selected at 610 being initiated, at decision 612, a check is performed to determine whether the at least one circuit breaker is in a fault condition pick-up mode, for example by determining whether a stored value is saved to the at least one circuit breaker trip unit memory or accumulator. If, at decision 612, it is determined that the one or more circuit breaker trip unit is not in a fault condition pick-up mode, for example because there is no, or a zero value, stored value saved to the at least one circuit breaker trip unit memory or accumulator, then at 614, the alternate protection increased sensitivity setting is implemented. If, at decision 612, it is determined that the one or more circuit breaker trip unit is in a fault condition pick-up mode, for example because there is a value saved to the at least one circuit breaker trip unit memory or accumulator, then at 616 the alternate protection increased sensitivity setting is not implemented for at least a predetermined delay.

In some embodiments, the embodiments disclosed herein may be implemented as a computer data signal embodied in a carrier wave, that represents a sequence of computer-executable instructions which, when executed by a processor cause the processor to perform the respective method, or any suitable combination of parts thereof. In other embodiments, the embodiments disclosed herein may be implemented as a computer-accessible medium having computer-executable instructions configured to direct a computer, a processor, or a microprocessor to perform the respective method, or any suitable combination of parts thereof. In various embodiments, the computer-accessible medium is a magnetic medium, an electronic medium, or an optical medium.

Embodiments are described in terms of a computer, processor, or microprocessor executing the sequence of computer-executable instructions. However, some embodiments can be implemented entirely in computer hardware in which the computer-executable instructions are implemented in read-only memory. Some embodiments can also be implemented in client/server computing environments where remote devices that perform tasks are linked through a communications network. Program modules can be located in both local and remote memory storage devices in distributed computing environments.

This specification, including the claims, abstract and drawings, is intended to cover any adaptations or variations of the specific embodiments illustrated and described herein. Accordingly, the names of elements, components or features, of the above-described system, methods, and apparatus are not intended to be limiting. It is contemplated that the above-described embodiments, whether adapted or varied or not, are applicable to future electrical distribution apparatus, systems and methods. Moreover, the terminology used herein is intended to encompass all electrical distribution apparatus, systems and methods that provide the same or equivalent functionality described herein.

Although effort was made to show all of the particular elements, components or features of each of the above-described specific embodiments in separate figures, this may not have been possible. In the event that one or more elements, components or features of one or more of the above-described specific embodiments are shown in some drawings and not in others, it is contemplated that each element, component or feature of one drawing may be combined with any or all of the other elements, components or features shown in any or all of the remainder of the drawings, as described herein, as claimed herein or in any other suitable fashion.

The words "including", "comprising", "having", and "with" as used herein are to be interpreted broadly and comprehensively and are not limited to any physical interconnection. Additionally, patentable scope is defined by the following claims, which are intended to encompass not only the specific embodiments described above, but also adaptations or variations thereof (i) that have structural elements that do not differ from the literal language of the claims, or (ii) that have equivalent structural elements with insubstantial differences from the literal language of the claims.

## Claims

1. A method for controlling a power distribution system, said method comprising:
defining with a central controller at least one normal mode configuration setting for at least one of a plurality of circuit breakers of the power distribution system;
defining with the central controller at least one alternate mode configuration setting for the at least one of the plurality of circuit breakers of the power distribution system, wherein the at least one alternate mode configuration setting includes a reduced energy let-thru (RELT) mode setting;
determining with the central controller if the at least one of the plurality of circuit breakers is in a pick-up mode;
operating the at least one of the plurality of circuit breakers using one of the at least one normal mode configuration setting and the at least one alternate mode configuration setting, wherein
the operating the at least one of the plurality of circuit breakers using the at least one alternate mode configuration setting is delayed for a predetermined period if the at least one of the plurality of circuit breakers is in a pick-up mode.

2. A method in accordance with claim 1 further comprising:
communicating with the at least one of the plurality of circuit breakers using a controller associated with the at least one of the circuit breakers.

3. A method in accordance with claim 1 or claim 2, further comprising receiving at the central controller an indication of a predetermined RELT condition from a sensor associated with the at least one of the plurality of circuit breakers.

4. A method in accordance with any preceding claim, wherein operating the at least one of the plurality of circuit breakers using the mode configuration setting comprises operating the at least one of the plurality of circuit breakers in a RELT mode.

5. A method in accordance with any preceding claim, wherein the sensor comprises at least one of a motion sensor, proximity sensor, door switch, maintenance switch, input from a programmable logic controller (PLC), and an auxiliary contact on a motor starter.

6. A method in accordance with any preceding claim, wherein operating the at least one of the plurality of circuit breakers comprises delaying a trip of the at least one of the plurality of circuit breakers by one of a first delay associated with the at least one alternate mode configuration setting and a second delay associated with the at least one normal mode configuration setting, wherein the second delay is longer than the first delay.

7. A method in accordance with any preceding claim, further comprising:
defining a trigger point according to a sensed condition such that the at least one alternate mode configuration setting is used to control the at least one of the plurality of circuit breakers associated with the trigger point.

8. A method in accordance with any preceding claim, further comprising modifying at least one of the at least one normal mode configuration setting and the at least one alternate mode configuration setting using an user interface of the central controller.

9. A method in accordance with any preceding claim, wherein the at least one normal mode configuration setting and the at least one alternate mode configuration setting comprise at least one of instantaneous switching settings, short time switching settings, and ground fault switching settings.

10. A method in accordance with any preceding claim, further comprising determining with the central controller the mode configuration setting to be used for the at least one of the plurality of circuit breakers based upon at least one of the at least one normal mode configuration setting, the at least one alternate mode configuration setting, user inputs, and events.

11. A controller for a power distribution system, said controller comprising:
a communication unit configured to communicate with a plurality of circuit breakers of the power distribution system; and
a processor configured to:
define at least one normal mode configuration setting and at least one alternate mode configuration setting for at least one of the plurality of circuit breakers;
determine if the at least one of the plurality of circuit breakers is in a pick-up mode;
operate the at least one of the plurality of circuit breakers using one of the at least one normal mode configuration setting and at least one alternate mode configuration setting; and
delay the operation of the at least one of the plurality of circuit breakers using the at least one alternate mode configuration setting for a predetermined period, if the at least one of the plurality of circuit breakers is in a pick-up mode.

12. A controller in accordance with claim 11, wherein the alternate mode configuration setting is a reduced energy let-thru (RELT) mode configuration setting, the controller further comprising an user interface configured to receive user modifications to at least one of the at least one normal mode configuration setting and the RELT mode configuration setting.

13. A controller in accordance with claim 11 or claim 12, wherein the processor is further configured to determine the mode configuration setting to be used for the at least one of the plurality of circuit breakers based upon at least one of the at least one normal mode configuration setting, the at least one alternate mode configuration setting, user inputs, and events.

14. The controller of any of claims 11 to 13, further comprising a first delay associated with the at least one alternate mode configuration setting and a second delay associated with the at least one normal mode configuration setting, wherein the second delay is longer than the first delay.
